# EUROPÄISCHE PATENTSCHRIFT

(11) **EP 3 820 166 B1**
(45) Veröffentlichungstag und Bekanntmachung des Hinweises auf die Patenterteilung: **16.03.2022**
(21) Anmeldenummer: 20200526.0
(22) Anmeldetag: 07.10.2020
(51) Int. Cl.: H04R 25/00

(54) **VERFAHREN ZUM BETRIEB EINES NETZWERKS SOWIE HÖRGERÄT**
HEARING AID AND METHOD FOR OPERATING A HEARING AID
PROCÉDÉS DE FONCTIONNEMENT D'UN RÉSEAU AINSI QU'APPAREIL AUDITIF

(30) Priorität: 11.11.2019 DE 102019217399
(43) Veröffentlichungstag der Anmeldung: 12.05.2021
(73) Patentinhaber: Sivantos Pte. Ltd., Singapore 539775 (SG)
(72) Erfinder: GÖKAY, Umut, 53639 Königswinter (DE); NAUMANN, Frank, 91088 Bubenreuth (DE)
(74) Vertreter: FDST Patentanwälte

(56) Entgegenhaltungen:
- DE-B3-102004 047 759
- US-A1- 2010 166 209
- US-B1- 7 352 705

## Beschreibung

Die Erfindung betrifft ein Verfahren zum Betrieb eines Netzwerks, mit mehreren Hörgeräten, sowie ein entsprechendes Hörgerät.

Ein Hörgerät ist üblicherweise einem einzelnen Nutzer zugeordnet und wird von diesem im oder am Ohr getragen, um Schall aus der Umgebung aufzunehmen und modifiziert wieder auszugeben. Hierzu weist das Hörgerät ein Mikrofon auf, welches Schall aufnimmt und ein elektrisches Eingangssignal erzeugt. Dieses wird zur Modifikation einer Signalverarbeitung des Hörgeräts zugeführt. Die Signalverarbeitung gibt als Ergebnis ein elektrisches Ausgangssignal aus, welches dann über einen Hörer des Hörgeräts wieder in Schall umgewandelt wird.

Treffen mehrere Nutzer mit jeweils einem Hörgerät an einem Ort zusammen, ist es unter Umständen sinnvoll, dass die Hörgeräte sich in einem Netzwerk miteinander verbinden, um Daten auszutauschen. Hörgeräte unterschiedlicher Nutzer, welche gemeinsam in einem Netzwerk verbunden sind, sind beispielsweise beschrieben in EP 1 643 801 A2 und EP 3 101 919 A1.

Zum Datenaustausch in einem Netzwerk weist ein Hörgerät eine Schnittstelle auf, deren Betrieb jedoch typischerweise sehr energieintensiv ist. Dies ist besonders bei Hörgeräten problematisch, welche mobile Geräte sind und somit nicht an eine feste Stromversorgung angeschlossen sind, sondern mittels eines im Hörgerät installierten Energiespeichers mit Energie versorgt werden. Daher ist auch die Reichweite der Schnittstelle häufig auf wenige Meter oder sogar weniger begrenzt, sodass ein Datenaustausch mit weit entfernt liegenden Hörgeräten schwierig ist.

Vor diesem Hintergrund ist es eine Aufgabe der Erfindung, die Vernetzung von Hörgeräten miteinander in einem gemeinsamen Netzwerk zu verbessern. Die Vernetzung und der Betrieb des Netzwerks sollen möglichst effizient sein, sodass der Datenaustausch insbesondere mit möglichst fehlerfrei, schnell und energiearm erfolgt. Insbesondere soll weiterhin für ein jeweiliges Hörgerät eine möglichst große Reichweite zum Datenaustausch erzielt werden.

Die Aufgabe wird erfindungsgemäß gelöst durch ein Verfahren mit den Merkmalen gemäß Anspruch 1 sowie durch ein Hörgerät mit den Merkmalen gemäß Anspruch 15. Vorteilhafte Ausgestaltungen, Weiterbildungen und Varianten sind Gegenstand der Unteransprüche. Dabei gelten die Ausführungen im Zusammenhang mit dem Verfahren sinngemäß auch für das Hörgerät und umgekehrt. Sofern nachfolgend Verfahrensschritte beschrieben werden, ergeben sich vorteilhafte Ausgestaltungen für das Hörgerät insbesondere dadurch, dass dieses ausgebildet ist, einen oder mehrere dieser Verfahrensschritte auszuführen.

Das Verfahren dient zum Betrieb eines Netzwerks, mit mehreren Hörgeräten, welche unterschiedlichen Nutzern zugeordnet sind. Das Netzwerk weist also mehrere Hörgeräte auf, welche jeweils ein Teilnehmer des Netzwerks sind und in diesem zum Datenaustausch miteinander verbunden sind. Vorliegend werden somit lediglich solche Hörgeräte betrachtet, welche explizit unterschiedlichen Nutzern zugeordnet sind. Ein jeweiliges Hörgerät ist insbesondere ein monaurales oder ein binaurales Hörgerät. Bei einem monauralen Hörgerät trägt ein Nutzer lediglich ein Einzelgerät auf lediglich einer Seite des Kopfes, bei einem binauralen Hörgerät trägt ein Nutzer zwei Einzelgeräte auf unterschiedlichen Seiten des Kopfes. Sämtliche Hörgeräte, welche an dem Netzwerk teilnehmen, sind Hörgeräte unterschiedlicher Nutzer, d.h. dass keine zwei Hörgeräte demselben Nutzer zugeordnet sind. Mit anderen Worten: die Verbindung zweier Einzelgeräte eines binauralen Hörgeräts eines einzelnen Nutzers wird vorliegend nicht betrachtet und ist auch nicht Gegenstand, vielmehr werden vorliegend im Falle zweier Einzelgeräte eines binauralen Hörgeräts diese zusammenfassend als "ein Hörgerät" bezeichnet. Unter "Hörgerät" werden vorliegend somit sämtliche Einzelgeräte verstanden, welche einem einzelnen Nutzer zugeordnet sind.

Jedes der Hörgeräte weist eine Schnittstelle auf und ist über diese mit wenigstens einem der übrigen Hörgeräte verbunden, zum Datenaustausch mit diesem Hörgerät und den übrigen Hörgeräten. Die Schnittstelle wird auch als Kommunikationsschnittstelle bezeichnet. Die Schnittstelle ist vorzugsweise eine Drahtlosschnittstelle. Die Schnittstelle ist geeigneterweise eine WLAN-, RF- oder Bluetooth-Antenne oder eine Antenne zur Kommunikation mittels Zigbee oder 5G. Ein jeweiliges Hörgerät ist nicht zwingend direkt mit jedem anderen Hörgerät verbunden, vielmehr genügt es bereits, wenn jedes Hörgerät mit einem anderen oder mehreren anderen der übrigen Hörgeräte derart verbunden ist, dass alle Hörgeräte zumindest mittelbar miteinander verbunden sind. Besteht keinerlei mittelbare oder unmittelbare Verbindung zwischen zwei Hörgeräten, so sind diese nicht Teilnehmer desselben Netzwerks.

Das Netzwerk ist in mehrere Subnetze teilbar, welche dann miteinander dadurch verbunden werden, dass in jedem der Subnetze eines der Hörgeräte als ein Gateway konfiguriert wird, zum Datenaustausch zwischen den Hörgeräten unterschiedlicher Subnetze. Ein wesentlicher Aspekt hierbei ist, dass als Gateway ein Hörgerät verwendet wird und nicht ein separates Zusatzgerät, welches kein Hörgerät ist. Dasjenige Hörgerät, welches als Gateway konfiguriert ist, führt demnach zusätzlich zu einer regulären Hörgerätefunktion noch eine Zusatzfunktion aus, nämlich eine Schnittstellenfunktion zwischen zwei Subnetzen. Ein Gateway zeichnet sich insbesondere dadurch aus, dass dieses den Datenaustausch eines Subnetzes und somit typischerweise mehrerer Hörgeräte bündelt und gesammelt an ein anderes Subnetz sendet. Die Hörgeräte unterschiedlicher Subnetze sind demnach lediglich mittelbar über das jeweilige Gateway verbunden. Ein einzelnes Hörgerät ist dabei entweder mehreren Subnetzen zugleich zugeordnet und ist dann in jedem dieser Subnetze ein Gateway oder ein Gateway eines ersten Subnetzes steht einem Gateway eines anderen, zweiten Subnetzes gegenüber, sodass die beiden Gateways den Datenaustausch zwischen den beiden Subnetzen steuern, vorzugsweise den kompletten Datenaustausch. Im ersten Fall überlappen zwei Subnetze dadurch dass das Gateway beiden Subnetzen zugeordnet ist. Im zweiten Fall weisen das erste und das zweite Subnetz jeweils ein Gateway auf und die Gateways sind miteinander verbunden, sodass die beiden Subnetze nicht überlappen, sondern jedes der beiden Gateways ist lediglich einem der beiden Subnetze zugeordnet. Bei einem Subnetz mit lediglich einem einzelnen Hörgerät, ist dieses zugleich ein Gateway des Subnetzes.

Zwei Gateways sind in einer bevorzugten Ausgestaltung direkt miteinander verbunden. In manchen Fällen ist jedoch die Verwendung eines Zusatzgerätes vorteilhaft, beispielsweise um Entfernungen zu überbrücken, welche größer sind als die Reichweite der Gateways. In einer ebenfalls geeigneten Ausgestaltung ist daher dann zwischen zwei Gateways zumindest ein Relais angeordnet, über welches die beiden Gateways mittelbar verbunden sind. Das Relais ist kein Hörgerät, sondern z.B. ein Router, Computer oder Smartphone, sodass die Gateways z.B. in einem gemeinsamen WLAN verbunden sind oder über das Internet.

Jedes der Hörgeräte, welches nicht als ein Gateway konfiguriert ist, ist genau einem Subnetz zugeordnet, d.h. gehört lediglich einem Subnetz an. Ein jeweiliges Gateway gehört dagegen je nach Ausgestaltung einem oder mehreren Subnetzen an. Insofern sind zwei geeignete Ausgestaltungen möglich: erstens, eine Ausgestaltung, bei welcher jedes der Hörgeräte, auch wenn dieses ein Gateway ist, genau einem Subnetz zugeordnet ist. Zweitens: eine Ausgestaltung, bei welcher ein Gateway mehreren Subnetzen zugeordnet ist, alle übrigen Hörgeräte, welche keine Gateways sind, jedoch jeweils genau einem Subnetz zugeordnet sind. Beide Ausgestaltung sind auch kombinierbar, sodass ein Gateway nur einem Subnetz zugeordnet ist, ein anderes dagegen mehreren Subnetzen. Sofern ein Gateway lediglich einem Subnetz angehört ist dieses Gateway mit einem Gateway eines anderen Subnetzes verbunden. Gehört ein Gateway mehreren Subnetzen an, dann überlappen diese Subnetze punktuell und insbesondere ausschließlich an diesem Gateway, welches dann ein gemeinsames Gateway der beiden Subnetze ist. Ein Hörgerät, welches kein Gateway ist, gehört aber immer lediglich einem einzigen Subnetz an.

Zudem wird im Rahmen des Verfahrens jedes der Hörgeräte dynamisch einem anderen, bestehenden Subnetz oder einem neuen Subnetz zugeordnet, zur Erhöhung einer Übertragungsqualität beim Datenaustausch. Mit anderen Worten: je nach dem, in welcher Konfiguration die Übertragungsqualität besser ist, werden dynamisch Subnetze gebildet oder aufgelöst und die Hörgeräte diesen auch dynamisch zugeordnet. Insgesamt werden die Hörgeräte somit derart miteinander verbunden, dass die Übertragungsqualität optimiert wird. Wesentlich ist, dass dies dynamisch geschieht, d.h. es wird regelmäßig und wiederkehrend geprüft, ob eine andere Konfiguration als die aktuelle Konfiguration zu einer besseren Übertragungsqualität führt, und falls dies der Fall ist, wird diese andere Konfiguration eingestellt. Diese Prüfung wird in einer geeigneten Ausgestaltung von den Hörgeräten selbst vorgenommen, beispielsweise von einem einzelnen Hörgerät im Netzwerk, welches hierfür als Master konfiguriert ist, oder von mehreren oder allen Hörgeräten, deren Ergebnisse hinsichtlich der Konfiguration dann verglichen werden. Dabei wird unter einer "Konfiguration" verstanden, welches Hörgerät konkret mit welchem anderen Hörgerät direkt verbunden ist, wie viele Subnetze ausgebildet sind, welches Hörgerät welchem Subnetz zugeordnet ist, welche Hörgeräte als Gateway konfiguriert sind oder eine Kombination hiervon. Die Aufteilung des Netzwerks in Subnetze und die Zuordnung der Hörgeräte zu diesen Subnetzen ist somit insgesamt gerade nicht statisch, d.h. einmalig festgelegt, sondern veränderlich, eben dynamisch, und wird auch verändert, mit dem Ziel, die Übertragungsqualität beim Datenaustausch insgesamt möglichst zu optimieren.

Die Übertragungsqualität wird in einer geeigneten Ausgestaltung gemessen als Übertragungsgeschwindigkeit oder als Datenrate oder als Fehlerrate beim Datenaustausch zwischen je wie Hörgeräten im Netzwerk. Beispielsweise wird dann aus den verschiedenen Übertragungsgeschwindigkeiten, Datenraten oder Fehlerraten ein Mittelwert gebildet, welcher dann durch eine Änderung der Konfiguration optimiert wird. Auch andere Metriken und Bewertungen für die Übertragungsqualität sind grundsätzlich denkbar und geeignet, wesentlich ist zunächst, dass die Kommunikation zwischen den Hörgeräten optimiert wird und dadurch verbessert ist.

Beim Datenaustausch werden zwischen den Hörgeräten Daten ausgetauscht. Diese Daten sind beispielsweise Audiodaten, Einstellungsdaten oder andere Daten oder eine Kombination hiervon. Beim Datenaustausch wird auch eine bestimmte Datenmenge übertragen, deren Größe maßgeblich die Übertragungsqualität beeinflusst. Da nämlich die verfügbare Bandbreite für den Datenaustausch üblicherweise begrenzt ist, führt eine zu große Datenmenge zu entsprechenden Übertragungsverlusten und -fehlern.

Die Erfindung geht insbesondere von der Erkenntnis aus, dass eine direkte Verbindung zweier Hörgeräte nach Art einer peer-to-peer Verbindung, d.h. ohne ein vermittelndes Zusatzgerät, besonders vorteilhaft ist. Eine solche peer-to-peer-Verbindung ermöglicht auf einfache Weise einen effizienten Datenaustausch. Bei mehreren Hörgeräten wäre dann jedes Hörgerät mit jedem anderen Hörgerät verbunden, sodass sich eine entsprechend hohe Anzahl an direkten Verbindungen ergibt. Das resultierende Netzwerk ist dann ein vollständiges peer-to-peer-Netzwerk, in welchem jeder Teilnehmer mit jedem anderen Teilnehmer verbunden ist. Entsprechend steigt der Bedarf an Energie und Bandbreite einer einzelnen Schnittstelle.

Ein Kerngedanke der Erfindung besteht nun insbesondere darin, die Vernetzung von Hörgeräten zu vereinfachen, indem die Verbindungen zwischen den Hörgeräten konsolidiert werden, sodass nicht zwingend jedes Hörgerät mit jedem anderen Hörgerät verbunden wird. Die Vernetzung von Hörgeräten wird derart gestaltet, dass diese nicht lediglich einfach paarweise direkt miteinander zum Datenaustausch verbunden sind, sondern dass auch lediglich mittelbare Verbindungen möglich sind. Solche mittelbaren Verbindungen werden insbesondere durch die Konfiguration einzelner Hörgeräte als Gateways hergestellt und dann genutzt, um die Anzahl der Verbindungen und auch die benötigte Bandbreite zu reduzieren. Vorteilhafterweise werden dadurch zusätzlich auch Entfernungen überbrückt, welche größer sind als die Reichweite der Schnittstelle eines Hörgeräts. Insgesamt wird damit insbesondere auch der Energiebedarf eines jeweiligen Hörgeräts reduziert. Dadurch, dass die Übertragungsqualität als Maß zur Optimierung der Vernetzung verwendet wird, wird eine besonders energieeffiziente Konfiguration erzielt und ein besonders schneller und fehlerfreier Datenaustausch realisiert.

In einer bevorzugten Ausgestaltung sind innerhalb zumindest eines Subnetzes, vorzugsweise jeweils innerhalb jedes Subnetzes, je zwei Hörgeräte nach Art einer peer-to-peer-Verbindung unmittelbar, d.h. direkt miteinander verbunden. Demnach ist zwar das Netzwerk insgesamt kein reines peer-to-peer-Netzwerk, jedoch sind die einzelnen Subnetze des Netzwerks jeweils als peer-to-peer-Netzwerke ausgebildet.

In einer geeigneten Ausgestaltung ist innerhalb zumindest eines Subnetzes, vorzugsweise jeweils innerhalb jedes Subnetzes, jedes Hörgerät mit jedem anderen Hörgerät des Subnetzes nach Art einer peer-to-peer-Verbindung unmittelbar, d.h. direkt miteinander verbunden, sodass das Subnetz ein vollständiges peer-to-peer-Netzwerk ist. In einem einzelnen Subnetz mit beispielsweise n Hörgeräten weist dann jedes Hörgerät n-1 Verbindungen zu den anderen Hörgeräten auf, sodass in dem Subnetz insgesamt n*(n-1) Verbindungen gebildet sind. Ein Subnetz, welches nach Art eines vollständigen peer-to-peer-Netzwerks ausgebildet ist, wird aufgrund der paarweisen Verbindungen zwischen allen Hörgeräten auch als Mesh-Netzwerk bezeichnet. Mehrere Mesh-Netzwerke sind dann über jeweilige Gateways miteinander verbunden.

Besonders vorteilhaft ist eine Ausgestaltung, bei welcher das Netzwerk abhängig von einer jeweiligen Teilnehmeranzahl in den Subnetzen dynamisch konfiguriert wird. Dabei wird eine Aufteilung der Hörgeräte auf mehrere Subnetze derart angestrebt, dass sich eine möglichst ausgeglichene Verteilung ergibt. In einer geeigneten Ausgestaltung hierzu ist das Netzwerk in wenigstens zwei Subnetze unterteilt, welche jeweils eine Teilnehmeranzahl aufweisen, welche angibt, wie viele Hörgeräte dem jeweiligen Subnetz zugeordnet sind. Die Hörgeräte werden nun derart auf die beiden Subnetze verteilt, dass die Teilnehmerzahlen aneinander angeglichen werden. Mit anderen Worten: eine Differenz der Teilnehmerzahlen unterschiedlicher Subnetze wird durch eine Umverteilung der Hörgeräte reduziert. Durch diesen Ausgleich der Teilnehmerzahlen wird einerseits der Datenaustausch zwischen den Subnetzen über die Gateways derart ausgeglichen, dass in beiden Richtungen ungefähr die gleiche Datenmenge übertragen wird. Bei unterschiedlich großen Subnetzen wäre die Datenmenge in einer Richtung typischerweise größer als in der anderen Richtung, sodass eine entsprechend höhere Bandbreite benötigt wird und ein entsprechend leistungsfähiges Hörgerät als Gateway. Weiter wird durch den Ausgleich der Teilnehmerzahlen auch die Datenmenge innerhalb des ursprünglich größeren Subnetzes reduziert und dadurch entsprechend die Anforderungen an die Hörgeräte in diesem Subnetz. Das andere Subnetz nimmt nun zusätzliche Teilnehmer auf, was zu einer entsprechend erhöhten Datenmenge führt. Dabei wird davon ausgegangen, dass dies im anderen Subnetz verkraftbar ist. Dies ist typischerweise gerechtfertigt, da für sämtliche Hörgeräte zumindest grob eine ähnliche Leistungsfähigkeit und vor allem eine ähnliche Bandbreite angenommen werden kann.

Alternativ oder zusätzlich zur Aufteilung der Hörgeräte auf bestehende Subnetze oder ausgehend von zunächst lediglich einem Subnetz ist es vorteilhaft, ein neues Subnetz zu erzeugen, um die Übertragungsqualität dadurch zu erhöhen, dass einige Hörgeräte aus den ursprünglichen Subnetzen in das neue Subnetz umgeordnet werden. Hierzu wird in einer geeigneten Ausgestaltung ein neues Subnetz erzeugt, falls eine Teilnehmeranzahl an Hörgeräten eines bestehenden Subnetzes eine Maximalanzahl überschreitet. Eine Teilmenge der Hörgeräte des bestehenden Subnetzes wird dann dem neuen Subnetz zugeordnet, sodass die Teilnehmerzahl des bestehenden Subnetzes reduziert wird. Mit anderen Worten: falls ein einzelnes Subnetz zu groß wird, wird ein Teil der Teilnehmer in ein neues Subnetz ausgelagert, sodass die Datenmenge im bestehenden Subnetz entsprechend reduziert ist und eine erhöhte Übertragungsqualität erzielt wird. Dies ist besonders vorteilhaft in Kombination mit einem Ausgleich zwischen mehreren Subnetzen wie zuvor beschrieben. Sofern ein neues Subnetz erzeugt wird, wird auch eines der Hörgeräte in dem neuen Subnetz als Gateway konfiguriert, zur Verbindung mit dem bestehenden Subnetz.

Zweckmäßigerweise wird ein bestehendes Subnetz entfernt, d.h. geschlossen, falls sich daraus keine oder lediglich minimale Einbußen hinsichtlich der Übertragungsqualität ergeben. Die Menge der Subnetze lässt sich dadurch auch wieder verringern, wenn kein entsprechender Bedarf besteht. Die Verwendung möglichst weniger Subnetze ist vorteilhaft, da hierdurch weniger Gateways benötigt werden, welche wie beschrieben beim Datenaustausch grundsätzlich stärker belastet werden als Hörgeräte, welche nicht als Gateway konfiguriert sind. Die Belastung durch den Datenaustausch ist dann insgesamt gleichmäßiger verteilt.

In einer bevorzugten Ausgestaltung ist zumindest ein Subnetz als ein Ringnetz ausgebildet, in welchem ein jeweiliges Hörgerät lediglich mit zwei anderen Hörgeräten verbunden ist, sodass der Datenaustausch innerhalb des Subnetzes der Reihe nach von Hörgerät zu Hörgerät erfolgt. Ein Ringnetz ist somit ebenfalls ein peer-to-peer-Netzwerk, da gleichartige Geräte, hier Hörgeräte, miteinander verbunden sind. In einer vorteilhaften Ausgestaltung sind sämtliche Subnetze jeweils als Ringnetz ausgebildet. Möglich und geeignet ist aber auch eine Kombination eines oder mehrerer Ringnetze mit einem oder mehreren Mesh-Netzwerken oder anderweitig gestalteten peer-to-peer-Netzwerken, wie oben beschrieben. Ein Ringnetz zeichnet sich durch eine besonders geringe Anzahl an Verbindungen aus, welche derart gebildet sind, dass die Hörgeräte des Subnetzes nacheinander in einer Reihe verbunden sind. In einem einzelnen Ringnetz mit beispielsweise n Hörgeräten weist jedes Hörgerät lediglich zwei Verbindungen zu anderen Hörgeräten auf, sodass dann in dem Subnetz insgesamt n Verbindungen gebildet sind. Durch die Reduzierung der Anzahl an Verbindungen werden auch die Datenmenge und die benötigte Bandbreite für den Datenaustausch im Subnetz reduziert, sodass sich eine verbesserte Übertragungsqualität ergibt. Im Ringnetz ist dann ein Ringbus ausgebildet, auf welchen von jedem der Hörgeräte dessen jeweilige Daten geschrieben werden und die Daten von anderen Hörgeräten gelesen werden. Die Daten laufen dann bildlich gesprochen ringförmig von einem Hörgerät zum jeweils nächsten Hörgerät. Ein Gateway im Ringnetz sendet die Daten einerseits zum nachfolgenden Hörgerät im Ringnetz und andererseits je nach Bedarf auch zu einem anderen Subnetz.

Bevorzugterweise ist das Netzwerk in wenigstens zwei Subnetze unterteilt, welche jeweils Ringnetze sind und welche jeweils eine Umlaufzeit aufweisen, welche angibt, wie lange ein Umlauf von Daten in dem Subnetz benötigt. Die Hörgeräte werden nun vorteilhafterweise derart auf die beiden Subnetze verteilt, dass die Umlaufzeiten aneinander angeglichen werden. Analog zum oben beschriebenen Ausgleich der Teilnehmerzahlen erfolgt dann ebenso eine Verteilung der Last des Datenaustauschs auf mehrere Subnetze. Da die Umlaufzeit häufig von der Teilnehmeranzahl abhängig ist, ergeben sich ähnlich vorteilhafte Effekte. Die Umlaufzeit ist jedoch genaueres Maß für die Übertragungsqualität innerhalb eines Subnetzes als die Teilnehmerzahl. Durch die Angleichung der Umlaufzeiten verschiedener Ringnetze wird daher eine entsprechende Verbesserung der Übertragungsqualität erzielt.

Vorteilhafterweise wird ein neues Subnetz erzeugt, falls eine Umlaufzeit eines bestehenden Subnetzes, welches ein Ringnetz ist, eine Maximallaufzeit überschreitet. Die Umlaufzeit ist dabei wie zuvor bereits beschrieben definiert. Eine Teilmenge der Hörgeräte des bestehenden Subnetzes wird dann dem neuen Subnetz zugeordnet, sodass die Umlaufzeit des bestehenden Subnetzes reduziert wird. Mit anderen Worten: bei Überschreitung der Maximallaufzeit wird ein Teil der Hörgeräte eines Ringnetzes in ein neues Subnetz ausgelagert, welches speziell neu gebildet wird, um die Umlaufzeit im ursprünglichen Subnetz zu reduzieren. Dem liegt die Überlegung zugrunde, dass die Umlaufzeit typischerweise maßgeblich von der Teilnehmeranzahl abhängt und daher auf einfache Weise reduziert wird, indem die Teilnehmerzahl reduziert wird. Anstatt also mit vielen Hörgeräten ein einzelnes, großes Ringnetz zu bilden, werden die Hörgeräte auf mehrere Subnetze, speziell mehrere Ringnetze verteilt, welche durch ein oder mehrere Gateways verbunden sind, sodass die Übertragungsqualität insgesamt optimiert ist.

Die Auswahl eines Hörgeräts als Gateway ist grundsätzlich per Zufallsauswahl möglich. Bevorzugterweise weist jedoch jedes der Hörgeräte eine Betriebsfähigkeit auf und in einem jeweiligen Subnetz wird dasjenige Hörgerät als ein Gateway konfiguriert, welches die höchste Betriebsfähigkeit aufweist. Hierzu wird die jeweilige Betriebsfähigkeit insbesondere ermittelt, z.B. durch das jeweilige Hörgerät selbst, und mit den Betriebsfähigkeiten der anderen Hörgeräte verglichen, z.B. indem die Betriebsfähigkeit beim Datenaustausch an die anderen Hörgeräte gesendet wird. Vorliegend wird somit gezielt eine Auswahl getroffen, welche einen verbesserten Betrieb des Netzwerks und somit einen besonders zuverlässigen Datenaustausch gewährleistet. Vorliegend wird nämlich in dem jeweiligen Subnetz dasjenige Hörgerät als Gateway ausgewählt, welches hierzu die höchste Befähigung aufweist. Diese Befähigung wird ausgedrückt durch die Betriebsfähigkeit eines jeweiligen Hörgeräts im Vergleich zur Betriebsfähigkeit der anderen Hörgeräte. Die Betriebsfähigkeit gibt an, wie sicher und zuverlässig der Betrieb des Hörgeräts zum gegebenen Zeitpunkt ist und vorzugsweise auch, wie sicher und zuverlässig der Betrieb des Hörgeräts zukünftig voraussichtlich ist. Dadurch wird sichergestellt, dass der Datenaustausch mit anderen Subnetzen vom hierfür fähigsten Hörgerät gesteuert wird. Sofern ein Master im Subnetz bestimmt wird, wird hierfür vorzugsweise analog das Hörgerät mit der höchsten Betriebsfähigkeit ausgewählt.

Die Betriebsfähigkeit des Hörgeräts wird insbesondere aus einem Betriebsparameter des Hörgeräts abgeleitet. Der Betriebsparameter ist eine Größe, welche sich im Betrieb des Hörgeräts typischerweise dynamisch verändert und dadurch einen bestimmten Zustand des Hörgeräts zu einem gegebenen Zeitpunkt anzeigt. Der Betriebsparameter quantifiziert insbesondere eine betriebsrelevante Eigenschaft des Hörgeräts oder einer Komponente des Hörgeräts. Der Betriebsparameter ist dabei unmittelbar oder mittelbar auch ein Maß für die aktuelle und/oder zukünftige Leistungsfähigkeit des Hörgeräts hinsichtlich dessen Funktionalität. Dadurch ist der Betriebsparameter besonders geeignet, um festzustellen, ob das Hörgerät als Gateway geeignet ist oder ob ein anderes Hörgerät geeigneter ist.

In einer besonders vorteilhaften Ausgestaltung wird die Betriebsfähigkeit anhand eines Ladezustands eines Energiespeichers des jeweiligen Hörgeräts bestimmt, sodass dasjenige Hörgerät als Gateway konfiguriert wird, welches in dem jeweiligen Subnetz den höchsten Ladezustand aufweist. Dadurch wird sichergestellt, dass das Hörgerät mit der größten Energiereserve den Datenaustausch mit einem anderen Subnetz steuert, wodurch ein möglichst langer Betrieb des Netzwerks insgesamt sichergestellt ist. Der Ladezustand ist ein Betriebsparameter des Hörgeräts. Im Betrieb des Hörgeräts verringert sich der Ladezustand zunehmend dadurch, dass das Hörgerät eine oder mehrere Funktionen ausführt, z.B. eine Modifikation in einer Signalverarbeitung oder eine Ausgabe von Schall über einen Hörer. Speziell als Gateway ist typischerweise -jedoch nicht zwingend - davon auszugehen, dass der Energieverbrauch aufgrund der zusätzlichen Funktion der Steuerung des Datenaustauschs zunimmt und der Ladezustand sich entsprechend schneller reduziert im Vergleich zur Rolle als einfacher Teilnehmer ohne Schnittstellenfunktion. Daher ist es zweckmäßig das Hörgerät mit dem höchsten Ladezustand als Gateway auszuwählen und zu konfigurieren.

In einer vorteilhaften Ausgestaltung wird die Betriebsfähigkeit anhand einer Sende- und/oder Empfangsqualität des Hörgeräts bestimmt, sodass dasjenige Hörgerät als Gateway konfiguriert wird, welches in dem jeweiligen Subnetz die höchste Sende- und/oder Empfangsqualität aufweist. Dadurch wird sichergestellt, dass das Hörgerät, dessen Schnittstelle die beste Sendequalität oder Empfangsqualität oder beides aufweist, den Datenaustausch mit einem anderen Subnetz steuert. Die Sende- und/oder Empfangsqualität ist beispielsweise quantifiziert durch eine durchschnittliche Signalstärke, mit welcher das Hörgerät Daten von anderen Hörgeräten empfängt oder an diese sendet oder beides. Die Sende- und/oder Empfangsqualität ist beispielsweise abhängig von der Position eines Hörgeräts relativ zu den anderen Hörgeräten und möglicherweise vorhandenen Hindernissen. Weiter ist die Sende- und/oder Empfangsqualität beispielsweise abhängig vom Typ und Aufbau einer Antenne des Hörgeräts, welche zum Senden und/oder Empfangen beim Datenaustausch verwendet wird.

Vorteilhaft ist auch eine Kombination mehrerer der vorgenannten Konzepte zur Bestimmung der Betriebsfähigkeit miteinander, sodass diese abhängig von mehreren verschiedenen Betriebsparametern eines Hörgeräts bestimmt wird. Beispielsweise werden dabei die unterschiedlichen Betriebsparameter mit unterschiedlicher Priorität berücksichtigt.

In einer zweckmäßigen Ausgestaltung wird ein Subnetz mit mehreren anderen Subnetzen dadurch verbunden, dass entsprechend viele Hörgeräte jeweils als ein Gateway zur Verbindung mit genau einem der anderen Subnetze konfiguriert werden, sodass ein jeweiliges Gateway mit lediglich einem Gateway eines anderen Subnetzes verbunden ist. Hierdurch ist eine 1:1-Verbindung realisiert und sichergestellt, dass ein einzelnes Gateway nicht übermäßig belastet wird, sondern die Verbindung zu lediglich einem anderen Subnetz steuert. Sofern bei der Auswahl eines Gateways dessen Betriebsfähigkeit berücksichtigt wird, werden dabei insbesondere solche Hörgeräte nicht berücksichtigt, welche bereits als Gateway konfiguriert sind.

Vorteilhaft ist auch eine Ausgestaltung, bei welcher ein erstes Subnetz mit einem zweiten Subnetz dadurch verbunden wird, dass ein einzelnes der Hörgeräte als ein Gateway sowohl in dem ersten Subnetz als auch in dem zweiten Subnetz konfiguriert wird. Dies führt zu dem eingangs erwähnten Fall, dass ein einzelnes Hörgerät mehreren Subnetzen zugleich zugeordnet ist. Dieser Fall, in welchem ein Hörgerät jeweils als Gateway für zwei unterschiedliche Subnetze konfiguriert ist, ist insbesondere auch der einzige Fall, in welchem ein einzelnes Hörgerät zwei Subnetzen zugleich zugeordnet ist. In allen übrigen Fällen ist ein einzelnes Hörgerät immer nur einem einzigen Subnetz zugeordnet. Auch in dem Fall, dass zwei Subnetze über zwei Gateways verbunden sind, sind diese beiden Gateways jeweils nur einem Subnetz zugeordnet. Die Doppelnutzung eines einzelnen Hörgeräts als Gateway sowohl in einem ersten als auch in einem zweiten Subnetz ist insofern vorteilhaft, als dass nur ein Hörgerät als Gateway konfiguriert und betrieben werden muss, um zwei Subnetze miteinander zu verbinden. Diese beiden Subnetze überlappen dann punktuell und insbesondere ausschließlich am Gateway, welches dann ein gemeinsames Gateway ist. Die übrigen Hörgeräte des ersten Subnetzes sind dann ausschließlich mittelbar über das gemeinsame Gateway mit den übrigen Hörgeräten des zweiten Subnetzes verbunden.

Zweckmäßigerweise werden solche Hörgeräte gemeinsam einem Subnetz zugeordnet, welche sich innerhalb eines Maximalabstands zueinander befinden, d.h. welcher sich in räumlicher Nähe zueinander befinden. In einer geeigneten Ausgestaltung beträgt der Maximalabstand zwischen 1 m und 10 m. Der Maximalabstand entspricht in einer geeigneten Ausgestaltung der Reichweite der Schnittstelle eines jeweiligen Hörgeräts. Entsprechend kann der Maximalabstand für jedes der Hörgeräte je nach Ausgestaltung grundsätzlich unterschiedlich sein. Eine Verbindung zu weiter entfernt liegenden Hörgeräten ist vorzugsweise mittels eines Gateways im Subnetz realisiert. Auf diese Weise sind lokale Subnetze ausgebildet, welche voneinander räumlich getrennt sind und untereinander durch die jeweiligen Gateways verbunden sind.

Um die Übertragungsqualität weiter zu verbessern wird zum Datenaustausch vorzugsweise ein Kompressionsverfahren verwendet. Das Kompressionsverfahren ist vorzugsweise in einer jeweiligen Steuereinheit eines jeweiligen Hörgeräts implementiert. Das Kompressionsverfahren dient zur Reduzierung der Datenmenge, welche beim Datenaustausch vom Hörgerät übermittelt wird. Dadurch wird insgesamt Bandbreite eingespart und die Übertragungsqualität entsprechend verbessert. Zudem lassen sich entsprechend größere Subnetze realisieren, d.h. Subnetze mit mehr Teilnehmern, als ohne Kompressionsverfahren.

Ein jeweiliges Hörgerät ist ausgebildet zur Durchführung eines Verfahrens wie vorstehend beschrieben. Vorzugsweise weist das Hörgerät hierzu eine Steuereinheit auf. In der Steuereinheit ist das Verfahren insbesondere programmtechnisch oder schaltungstechnisch realisiert oder eine Kombination hiervon. Beispielswiese ist die Steuereinheit hierfür als ein Mikroprozessor oder als ein ASIC ausgebildet oder als eine Kombination hiervon.

Ein jeweiliges Hörgerät ist vorzugsweise ein monaurales oder ein binaurales Hörgerät. Ein binaurales Hörgerät weist zwei Einzelgeräte auf, welche vom Nutzer auf unterschiedlichen Seiten getragen werden, also jeweils im oder am linken und rechten Ohr. Ein monaurales Hörgerät weist lediglich ein Einzelgerät auf, welches vom Nutzer am oder im linken oder rechten Ohr getragen wird. Speziell bei einem binauralen Hörgerät ist eine Ausgestaltung vorteilhaft, bei welcher eines der Einzelgeräte die Schnittstelle zum Datenaustausch mit anderen Hörgeräten aufweist, wohingegen das andere Einzelgerät nicht direkt mit anderen Hörgeräten Daten austauscht, sondern mittelbar über das Einzelgerät mit der Schnittstelle am Netzwerk teilnimmt. Auf diese Weise wird im Betrieb Energie eingespart, da beide Einzelgeräte über lediglich eine Schnittstelle in das Netzwerk eingebunden sind.

Ein jeweiliges Hörgerät dient vorzugsweise zur Versorgung eines hörgeschädigten Nutzers. Hierzu weist das Hörgerät ein Mikrofon auf, welches Schall aus der Umgebung aufnimmt und ein elektrisches Eingangssignal erzeugt. Dieses wird zur Modifikation einer Signalverarbeitung des Hörgeräts zugeführt. Die Signalverarbeitung ist vorzugsweise ein Teil der Steuereinheit. Die Modifikation erfolgt insbesondere anhand eines individuellen Audiogramms des Nutzers, welcher dem Hörgerät zugeordnet ist, sodass ein individuelles Hördefizit des Nutzers ausgeglichen wird. Die Signalverarbeitung gibt als Ergebnis ein elektrisches Ausgangssignal aus, welches dann über einen Hörer des Hörgeräts wieder in Schall umgewandelt wird und an den Nutzer ausgegeben wird.

Nachfolgend werden Ausführungsbeispiele der Erfindung anhand einer Zeichnung näher erläutert. Darin zeigen jeweils schematisch:
- Fig. 1: ein Hörgerät,
- Fig. 2: ein Netzwerk,
- Fig. 3: eine Variante des Netzwerks,
- Fig. 4: eine weitere Variante des Netzwerks,
- Fig. 5: eine weitere Variante des Netzwerks,
- Fig. 6: eine weitere Variante des Netzwerks,
- Fig. 7: eine weitere Variante des Netzwerks,
- Fig. 8: eine weitere Variante des Netzwerks,
- Fig. 9: eine weitere Variante des Netzwerks,
- Fig. 10: eine weitere Variante des Netzwerks.

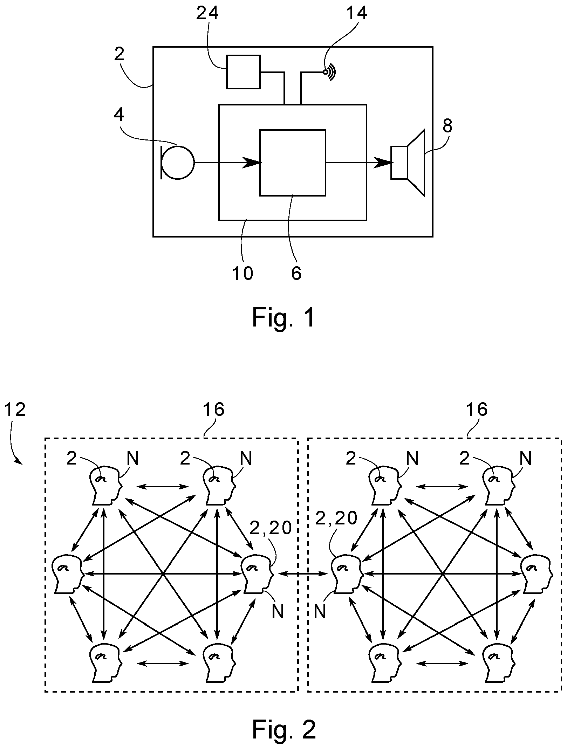

In Fig. 1 ist ein Hörgerät 2 gezeigt, welches hier speziell zur Versorgung eines in Fig. 1 nicht explizit gezeigten, hörgeschädigten Nutzers N dient. Hierzu weist das Hörgerät 2 ein Mikrofon 4 auf, welches Schall aus der Umgebung aufnimmt und ein elektrisches Eingangssignal erzeugt. Dieses wird zur Modifikation einer Signalverarbeitung 6 des Hörgeräts 2 zugeführt. Die Modifikation erfolgt vorliegend anhand eines individuellen Audiogramms des Nutzers N, welcher dem Hörgerät 2 zugeordnet ist, sodass ein individuelles Hördefizit des Nutzers N ausgeglichen wird. Die Signalverarbeitung 6 gibt als Ergebnis ein elektrisches Ausgangssignal aus, welches dann über einen Hörer 8 des Hörgeräts 2 wieder in Schall umgewandelt wird und an den Nutzer N ausgegeben wird. Die Signalverarbeitung 6 ist im gezeigten Ausführungsbeispiel ein Teil einer Steuereinheit 10 des Hörgeräts 2.

Das Hörgerät 2 nimmt zudem als ein Teilnehmer an einem Netzwerk 12 teil, zum Datenaustausch mit anderen Hörgeräten 2, welche anderen Nutzern N zugeordnet sind. Beispielhafte Netzwerke 12 sind in den Fig. 2 bis 10 gezeigt.

Die vorliegend betrachteten Hörgeräte 2 sind explizit unterschiedlichen Nutzern N zugeordnet. Ein jeweiliges Hörgerät 2 ist hier ein monaurales oder ein binaurales Hörgerät 2. Bei einem monauralen Hörgerät 2 trägt ein Nutzer N lediglich ein Einzelgerät auf lediglich einer Seite des Kopfes, bei einem binauralen Hörgerät 2 trägt ein Nutzer zwei Einzelgeräte auf unterschiedlichen Seiten des Kopfes. Sämtliche Hörgeräte 2, welche an dem Netzwerk 12 teilnehmen, sind Hörgeräte 2 unterschiedlicher Nutzer N, d.h. dass keine zwei Hörgeräte 2 demselben Nutzer N zugeordnet sind.

Jedes der Hörgeräte 2 weist eine Schnittstelle 14 auf und ist über diese mit wenigstens einem der übrigen Hörgeräte 2 verbunden, zum Datenaustausch mit diesem und den übrigen Hörgeräten 2. Die beispielhaft gezeigten Netzwerke 12 sind drahtlose Netzwerke 12, die Schnittstellen 14 entsprechend Drahtlosschnittstellen, z.B. WLAN-, Bluetooth- oder RF-Antennen.

Nachfolgend wird anhand der Fig. 2 bis 10 ein Verfahren zum Betrieb eines Netzwerks 12 beschrieben. Ein Netzwerk 12 weist grundsätzlich mehrere Hörgeräte 2 auf, welche unterschiedlichen Nutzern N zugeordnet sind. Das Netzwerk 12 ist in mehrere Subnetze 16, 18 teilbar, welche dann miteinander dadurch verbunden werden, dass in jedem der Subnetze 16, 18 eines der Hörgeräte 2 als ein Gateway 20 konfiguriert wird, zum Datenaustausch zwischen den Hörgeräten 2 unterschiedlicher Subnetze 16, 18. Dabei ist jedes der Hörgeräte 2, welche nicht als ein Gateway 20 konfiguriert ist, genau einem Subnetz 16, 18 zugeordnet und wird dynamisch einem anderen, bestehenden Subnetz 16, 18 oder einem neuen Subnetz 16, 18 zugeordnet, zur Erhöhung einer Übertragungsqualität beim Datenaustausch.

Ein jeweiliges Hörgerät 2 ist nicht zwingend direkt mit jedem anderen Hörgerät 2 verbunden, vielmehr genügt es bereits, wenn jedes Hörgerät 2 mit einem anderen oder mehreren anderen der übrigen Hörgeräte 2 derart verbunden ist, dass alle Hörgeräte 2 zumindest mittelbar miteinander verbunden sind. Besteht keinerlei mittelbare oder unmittelbare Verbindung zwischen zwei Hörgeräten 2, so sind diese nicht Teilnehmer desselben Netzwerks 12.

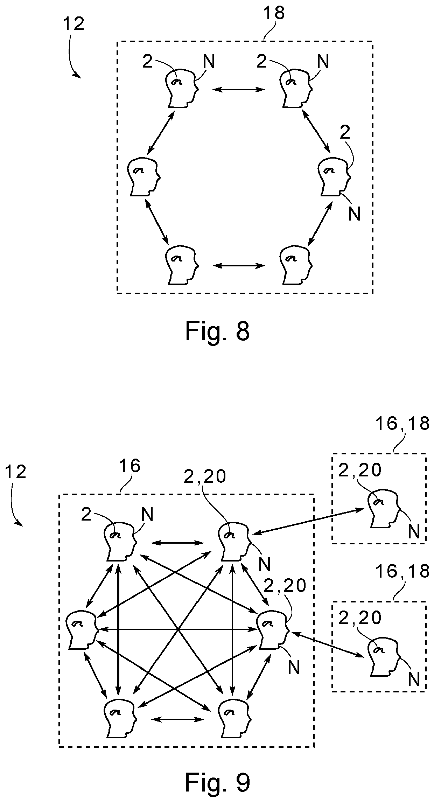

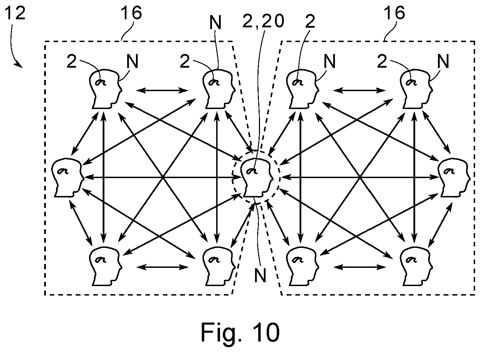

Als Gateway 20 wird vorliegend explizit ein Hörgerät 2 verwendet und nicht ein separates Zusatzgerät, welches kein Hörgerät 2 ist. Dasjenige Hörgerät 2, welches als Gateway 20 konfiguriert ist, führt demnach zusätzlich zu einer regulären Hörgerätefunktion noch eine Zusatzfunktion aus, nämlich eine Schnittstellenfunktion zwischen zwei Subnetzen 16, 18. Ein Gateway 20 zeichnet sich somit vorliegend dadurch aus, dass dieses den Datenaustausch eines Subnetzes 16, 18 bündelt und gesammelt an ein anderes Subnetz 16, 18 sendet, genauer gesagt an ein entsprechendes Gateway 20 des anderen Subnetzes 16, 18. Die Hörgeräte 2 unterschiedlicher Subnetze 16, 18 sind demnach lediglich mittelbar über das Gateway 20 verbunden. In den Ausführungsbeispielen der Fig. 2 bis 7 und 9 steht einem Gateway 20 in einem Subnetz 16, 18 ein anderes Gateway 20 in einem anderen Subnetz 16, 18 gegenüber, sodass die beiden Gateways 20 den Datenaustausch zwischen den beiden Subnetzen 16, 18 steuern. Bei einem Subnetz 16, 18 mit lediglich einem einzelnen Hörgerät 2, ist dieses zugleich ein Gateway 20 des Subnetzes 16, 18, wie in Fig. 8 gezeigt. In Fig. 10 dient schließlich ein einzelnes Hörgerät 2 jeweils als Gateway 20 für ein erstes und ein zweites Subnetz 16, sodass die beiden Subnetze 16 überlappen.

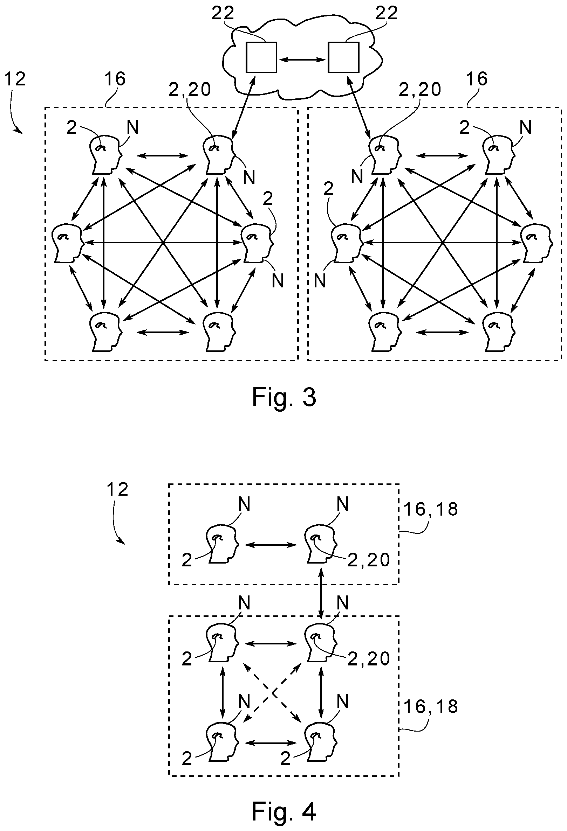

In Fig. 2 ist ein Ausführungsbeispiel gezeigt, bei welchem das Netzwerk 12 in zwei Subnetze 16 unterteilt ist. Weiter sind in Fig. 2 die zwei Gateways 20 direkt miteinander verbunden. In manchen Fällen ist jedoch wie in der Alternative in Fig. 3 die Verwendung eines Zusatzgerätes 22 vorteilhaft, beispielsweise um Entfernungen zu überbrücken, welche größer sind als die Reichweite der Gateways 20. In Fig. 3 ist daher zwischen den beiden Gateways 20 zumindest ein Zusatzgerät 22, nämlich ein Relais angeordnet, über welches die beiden Gateways 20 mittelbar verbunden sind. Das Relais ist kein Hörgerät 2, sondern z.B. ein Router, Computer oder Smartphone, sodass die Gateways 20 wie in Fig. 3 gezeigt z.B. in einem gemeinsamen WLAN verbunden sind oder über das Internet.

In den Ausführungsbeispielen ist jedes der Hörgeräte 2, welches kein Gateway 20 ist, genau einem Subnetz 16, 18 zugeordnet. Im Rahmen des Verfahrens wird nun jedes der Hörgeräte 2 dynamisch einem anderen, bestehenden Subnetz 16, 18 oder einem neuen Subnetz 16, 18 zugeordnet, zur Erhöhung einer Übertragungsqualität beim Datenaustausch. Mit anderen Worten: je nach dem, in welcher Konfiguration die Übertragungsqualität besser ist, werden dynamisch Subnetze 16, 18 gebildet oder aufgelöst und die Hörgeräte 2 diesen auch dynamisch zugeordnet. Insgesamt werden die Hörgeräte 2 derart miteinander verbunden, dass die Übertragungsqualität optimiert wird. Wesentlich ist, dass dies dynamisch geschieht, d.h. es wird regelmäßig und wiederkehrend geprüft, ob eine andere Konfiguration als die aktuelle Konfiguration zu einer besseren Übertragungsqualität führt, und falls dies der Fall ist, wird diese andere Konfiguration eingestellt. Dabei wird unter einer "Konfiguration" verstanden, welches Hörgerät 2 konkret mit welchem anderen Hörgerät 2 direkt verbunden ist, wie viele Subnetze 16, 18 ausgebildet sind, welches Hörgerät 2 welchem Subnetz 16, 18 zugeordnet ist, welche Hörgeräte 2 als Gateway 20 konfiguriert sind oder eine Kombination hiervon. Die Aufteilung des Netzwerks 12 in Subnetze 16, 18 und die Zuordnung der Hörgeräte 2 zu diesen Subnetzen 16, 18 ist somit gerade nicht statisch, d.h. einmalig festgelegt, sondern veränderlich, eben dynamisch, und wird auch verändert, mit dem Ziel, die Übertragungsqualität beim Datenaustausch insgesamt möglichst zu optimieren. Entsprechend können die in den Fig. 2 bis 10 gezeigten Situationen dynamisch grundsätzlich ineinander übergehen.

Beim Datenaustausch werden zwischen den Hörgeräten 2 Daten ausgetauscht. Diese Daten sind beispielsweise Audiodaten, Einstellungsdaten oder andere Daten oder eine Kombination hiervon. Beim Datenaustausch wird auch eine bestimmte Datenmenge übertragen, deren Größe maßgeblich die Übertragungsqualität beeinflusst. Da nämlich die verfügbare Bandbreite für den Datenaustausch üblicherweise begrenzt ist, führt eine zu große Datenmenge zu entsprechenden Übertragungsverlusten und -fehlern. Die Übertragungsqualität wird vorliegend beispielsweise gemessen als Übertragungsgeschwindigkeit oder als Datenrate oder als Fehlerrate beim Datenaustausch im Netzwerk 12, beispielsweise als mittlere Übertragungsqualität aller Verbindungen zwischen je zwei Hörgeräten 2. Verbindungen zwischen Hörgeräten 2 oder zwischen Hörgeräten 2 und Zusatzgeräten 22 oder zwischen Zusatzgeräten 22 sind in den Fig. 2 bis 10 grundsätzlich als Pfeile dargestellt.

Vorliegend wird die Vernetzung von Hörgeräten 2 derart gestaltet, dass diese nicht lediglich einfach paarweise direkt miteinander zum Datenaustausch verbunden sind, sondern dass auch mittelbare Verbindungen möglich sind. Solche mittelbaren Verbindungen werden durch die Konfiguration einzelner Hörgeräte 2 als Gateways 20 hergestellt und dann genutzt, um die Anzahl der Verbindungen und auch die benötigte Bandbreite zu reduzieren. Dadurch werden gegebenenfalls zusätzlich auch Entfernungen überbrückt, welche größer sind als die Reichweite der Schnittstelle 14 eines Hörgeräts. Insgesamt wird damit auch der Energiebedarf eines jeweiligen Hörgeräts 2 reduziert.

In den Ausführungsbeispielen der Fig. 2 bis 10 sind innerhalb eines oder mehrerer Subnetze 16,18 je zwei Hörgeräte 2 nach Art einer peer-to-peer-Verbindung unmittelbar, d.h. direkt miteinander verbunden. Demnach ist zwar das Netzwerk 12 insgesamt kein reines peer-to-peer-Netzwerk, jedoch sind die einzelnen Subnetze 16, 18 des Netzwerks 12 jeweils als peer-to-peer-Netzwerke ausgebildet.

Ein Subnetz 16, welches nach Art eines vollständigen peer-to-peer-Netzwerks ausgebildet ist, in welchem jedes Hörgerät 2 mit jedem anderen Hörgerät 2 verbunden ist, wird aufgrund der maximalen Anzahl paarweiser Verbindungen zwischen den einzelnen Hörgeräten 2 auch als Mesh-Netzwerk 16 bezeichnet. Mehrere Mesh-Netzwerke 16 sind dann wie gezeigt über jeweilige Gateways 20 miteinander verbunden. In den Fig. 2 und 3 sind jeweils Mesh-Netzwerke 16 gezeigt, die Ausführungen hierzu gelten jedoch analog auch für andere peer-to-peer-Netzwerke mit weniger Verbindungen.

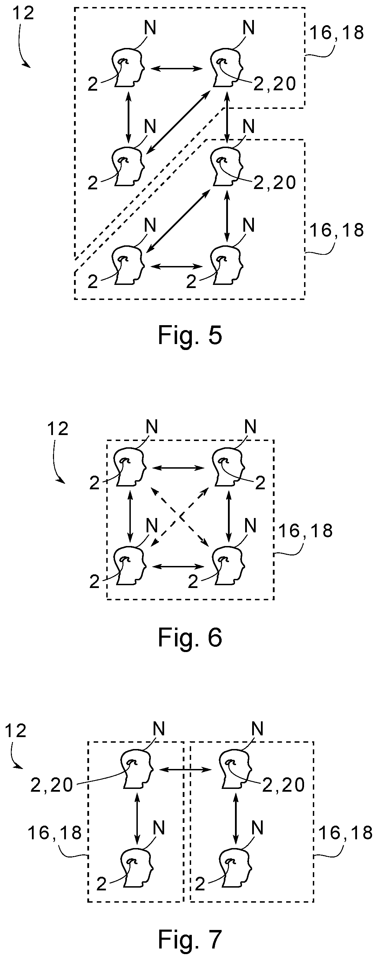

In einer Ausgestaltung des Verfahren wird das Netzwerk 12 abhängig von einer jeweiligen Teilnehmeranzahl in den Subnetzen 16, 18 dynamisch konfiguriert. Dabei wird eine Aufteilung der Hörgeräte 2 auf mehrere Subnetze 16, 18 derart angestrebt, dass sich eine möglichst ausgeglichene Verteilung ergibt. Dies ist in den Fig. 4 und 5 beispielhaft gezeigt, in welchen das Netzwerk 12 in wenigstens zwei Subnetze 16, 18 unterteilt ist, welche jeweils eine Teilnehmeranzahl aufweisen, welche angibt, wie viele Hörgeräte 2 dem jeweiligen Subnetz 16, 18 zugeordnet sind. Ausgehend von der Konfiguration in Fig. 4 mit beispielhaft zwei und vier Teilnehmern in den beiden Subnetzen 16, 18 werden nun die Hörgeräte 2 wie in Fig. 5 gezeigt derart auf die beiden Subnetze 16, 18 verteilt, dass die Teilnehmerzahlen aneinander angeglichen werden. In dem gezeigten Beispiel weist dann jedes Subnetz 16, 18 drei Teilnehmer auf. Dadurch wird einerseits der Datenaustausch zwischen den Subnetzen 16, 18 über die Gateways 20 derart ausgeglichen, dass in beiden Richtungen ungefähr die gleiche Datenmenge übertragen wird. Weiter wird durch den Ausgleich der Teilnehmerzahlen auch die Datenmenge innerhalb des ursprünglich größeren Subnetzes 16, 18 reduziert und dadurch entsprechend die Anforderungen an die Hörgeräte 2 in diesem Subnetz 16, 18. Das andere Subnetz 16, 18 nimmt nun zusätzliche Teilnehmer auf, was zu einer entsprechend erhöhten Datenmenge führt, wobei davon ausgegangen wird, dass dies im anderen Subnetz 16, 18 verkraftbar ist. In den Fig. 4 und 5 wurden die beiden Gateways 20 beibehalten, dies ist jedoch nicht zwingend. In einer nicht gezeigten Variante werden daher beim Ausgleich der Teilnehmerzahlen ein oder mehrere andere Hörgeräte 2 als Gateways 20 konfiguriert.

Alternativ oder zusätzlich zur Aufteilung der Hörgeräte 2 auf bestehende Subnetze 16, 18 oder ausgehend von zunächst lediglich einem Subnetz 16, 18 wird im Ausführungsbeispiel der Fig. 6 und 7 ein neues Subnetz 16, 18 erzeugt, um die Übertragungsqualität dadurch zu erhöhen, dass einige Hörgeräte 2 aus dem ursprünglichen Subnetz 16, 18 in das neue Subnetz 16, 18 umgeordnet werden. Hierzu wird ein neues Subnetz 16, 18 erzeugt, falls eine Teilnehmeranzahl an Hörgeräten 2 eines bestehenden Subnetzes 16, 18 wie in Fig. 6 gezeigt eine Maximalanzahl überschreitet. Eine Teilmenge der Hörgeräte 2 des bestehenden Subnetzes 16, 18 wird dann wie in Fig. 7 gezeigt dem neuen Subnetz 16, 18 zugeordnet, sodass die Teilnehmerzahl des bestehenden Subnetzes 16, 18 reduziert wird. Sofern ein neues Subnetz 16, 18 erzeugt wird, wird auch eines der Hörgeräte 2 in dem neuen Subnetz 16, 18 als Gateway 20 konfiguriert, zur Verbindung mit dem bestehenden Subnetz 16, 18.

Die anhand der Fig. 4 und 5 sowie 6 und 7 erläuterten Konzepte sind grundsätzlich auch umkehrbar. Zudem wird in einer nicht gezeigten Variante ein bestehendes Subnetz 16, 18 entfernt, d.h. geschlossen, falls sich daraus keine oder lediglich minimale Einbußen hinsichtlich der Übertragungsqualität ergeben. Die Menge der Subnetze 16, 18 lässt sich dadurch auch wieder verringern, wenn kein entsprechender Bedarf besteht. Dadurch werden dann weniger Gateways 20 benötigt.

Als Alternative zu einem Mesh-Netzwerk 16 sind neben allgemeinen peer-to-peer-Netzwerken auch speziell Ringnetze 18 vorteilhaft. Fig. 8 zeigt ein Netzwerk 12, mit einem Subnetz 18, welches als ein Ringnetz 18 ausgebildet ist. In einem Ringnetz 18 ist ein jeweiliges Hörgerät 2 lediglich mit zwei anderen Hörgeräten 2 verbunden, sodass der Datenaustausch innerhalb des Subnetzes 18 der Reihe nach von Hörgerät 2 zu Hörgerät 2 erfolgt. Möglich und geeignet ist auch eine Kombination eines oder mehrerer Ringnetze 18 mit einem oder mehreren Mesh-Netzwerken 16. Im Ringnetz ist ein Ringbus ausgebildet, auf welchen von jedem der Hörgeräte 2 dessen jeweilige Daten geschrieben werden und die Daten von anderen Hörgeräten 2 gelesen werden. Die Daten laufen dann ringförmig von einem Hörgerät 2 zum jeweils nächsten Hörgerät 2. Ein Gateway 20 im Ringnetz sendet die Daten einerseits zum nachfolgenden Hörgerät 2 im Ringnetz und andererseits je nach Bedarf auch zu einem anderen Subnetz 16, 18.

Die Ausführungsbeispiele der Fig. 4 bis 7 lassen sich speziell aufgrund der geringen Teilnehmeranzahl sowohl aus Ausgestaltungen mit Mesh-Netzwerken 16 als auch mit Ringnetzen 18 lesen. Bei mehr Teilnehmern sind jedoch je nach Verbindungen der Hörgeräte 2 innerhalb eines jeweiligen Subnetzes 16, 18 diese Subnetze 16, 18 jeweils eindeutig als Ringnetz oder als Mesh-Netzwerk oder als eine Zwischenform hiervon erkennbar, insgesamt aber immer als peer-to-peer-Netzwerk. Um die unterschiedlichen Ausgestaltungen zu illustrieren, sind in den Fig. 4 und6 gestrichene Pfeile eingezeichnet, welche Verbindungen darstellen, falls ein Mesh-Netzwerk 16 vorliegt. Falls ein Ringnetz 16 vorliegt, sind diese gestrichen dargestellten Verbindungen nicht vorhanden.

Die Fig. 4 und 5 lassen sich somit auch auf ein alternatives Ausführungsbeispiel lesen, bei welchem das Netzwerk 12 in wenigstens zwei Subnetze 18 unterteilt, welche jeweils Ringnetze 18 sind und welche jeweils eine Umlaufzeit aufweisen, welche angibt, wie lange ein Umlauf von Daten in dem Subnetz 18 benötigt. Die Hörgeräte 2 werden nun derart auf die beiden Subnetze 18 verteilt, dass die Umlaufzeiten aneinander angeglichen werden. Analog zum oben beschriebenen Ausgleich der Teilnehmerzahlen erfolgt dann ebenso eine Verteilung der Last des Datenaustauschs auf mehrere Subnetze 18.

Ebenso lassen sich die Fig. 6 und 7 auch auf ein alternatives Ausführungsbeispiel lesen bei welchem ein neues Subnetz 18 erzeugt wird, falls eine Umlaufzeit eines bestehenden Subnetzes 18, welches ein Ringnetz 18 ist, eine Maximallaufzeit überschreitet. Die Umlaufzeit ist dabei wie zuvor bereits beschrieben definiert. Eine Teilmenge der Hörgeräte 2 des bestehenden Subnetzes 18 wird dann dem neuen Subnetz 18 zugeordnet, sodass die Umlaufzeit des bestehenden Subnetzes 18 reduziert wird.

Bei der Änderung der Zuordnung von Hörgeräten 2 zu Subnetzes 16, 18 ist es grundsätzlich auch möglich und mitunter vorteilhaft, die Art des Subnetzes 16, 18 zu ändern, also z.B. ein Ringnetz 18 in ein Mesh-Netzwerk 16 oder allgemein ein anderes peer-to-peer Netzwerk umzuwandeln oder umgekehrt.

In einer Ausführungsform wird ein Subnetz 16, 18 mit mehreren anderen Subnetzen 16, 18 dadurch verbunden, dass entsprechend viele Hörgeräte 2 jeweils als ein Gateway 20 zur Verbindung mit genau einem der anderen Subnetze 16, 18 konfiguriert werden, sodass ein jeweiliges Gateway 20 mit lediglich einem Gateway 20 eines anderen Subnetzes 16, 18 verbunden ist. Ein Ausführungsbeispiel hierfür ist in Fig. 9 gezeigt. Dort ist das Netzwerk 12 in drei Subnetze 16, 18 unterteilt, wobei zweien der Subnetze 16, 18 jeweils lediglich ein einzelner Teilnehmer zugeordnet ist. Dem dritten Subnetz 16 sind dagegen mehrere Teilnehmer zugeordnet und vor Allem sind zwei dieser Teilnehmer als Gateways 20 konfiguriert, um dieses dritte Subnetz 16 jeweils mit den anderen Subnetzen 16, 18 zu verbinden. Dabei ist auch unmittelbar klar, dass sich weitere nicht gezeigte Varianten dadurch ergeben, dass die Subnetze 16, 18 anders ausgestaltet sind, beispielsweise andere Teilnehmerzahlen aufweisen oder als Ringnetz 18 oder als Mesh-Netzwerk 16 oder als eine Zwischenform hiervon und jedenfalls allgemein als peer-to-peer-Netzwerk ausgebildet sind. Auch ist eine Ausgestaltung möglich, bei welcher die Subnetze 16, 18 je paarweise über Gateways 20 miteinander verbunden sind, sodass z.B. ein übergeordnetes Ringnetz von Subnetzen 16, 18 oder eine sonstwie verzweigte Struktur von Subnetzen 16, 18 gebildet ist.

In Fig. 10 ist eine Ausgestaltung gezeigt, bei welcher ein erstes Subnetz 16 mit einem zweiten Subnetz 16 dadurch verbunden wird, dass ein einzelnes der Hörgeräte 2 als ein Gateway 20 sowohl in dem ersten Subnetz 16 als auch in dem zweiten Subnetz 16 konfiguriert wird. Dies führt zu dem Fall, dass ein einzelnes Hörgerät 2 mehreren Subnetzen 16 zugleich zugeordnet ist. Dieser Fall, in welchem ein Hörgerät 2 jeweils als Gateway 20 für zwei unterschiedliche Subnetze 16 konfiguriert ist, ist insbesondere auch der einzige Fall, in welchem ein einzelnes Hörgerät 2 zwei Subnetzen 16 zugleich zugeordnet ist. In allen übrigen Fällen ist ein einzelnes Hörgerät 2 immer nur einem einzigen Subnetz 16 zugeordnet, wie z.B. aus den Fig. 2 bis 7 und 9 deutlich wird. Auch in dem Fall, dass wie in den Fig. 2 bis 7 und 9 zwei Subnetze 16 über zwei Gateways 20 verbunden sind, sind diese beiden Gateways 20 jeweils nur einem Subnetz 16 zugeordnet. Die Doppelnutzung eines einzelnen Hörgeräts 2 als Gateway 20 sowohl in einem ersten als auch in einem zweiten Subnetz 16 wie beispielhaft in Fig. 10 gezeigt führt dazu, dass nur ein Hörgerät 2 als Gateway 20 konfiguriert und betrieben werden muss, um zwei Subnetze 16 miteinander zu verbinden. Diese beiden Subnetze 16 überlappen dann punktuell und insbesondere ausschließlich am Gateway 20, welches dann ein gemeinsames Gateway 20 ist. Die übrigen Hörgeräte 2 des ersten Subnetzes 16 sind dann ausschließlich mittelbar über das gemeinsame Gateway 20 mit den übrigen Hörgeräten 2 des zweiten Subnetzes 16 verbunden. In Fig. 10 sind zwar zwei Mesh-Netzwerke 16 gezeigt, die Ausführungen gelten jedoch analog für Ringnetze 18 oder eine Kombination aus einem Ringnetz 18 und einem Mesh-netz 16.

Die Auswahl eines Hörgeräts 2 als Gateway 20 ist grundsätzlich per Zufallsauswahl möglich, d.h. willkürlich. In einer möglichen Ausgestaltung weist jedoch jedes der Hörgeräte 2 eine Betriebsfähigkeit auf und in einem jeweiligen Subnetz 16, 18 wird dasjenige Hörgerät 2 als ein Gateway 20 konfiguriert, welches die höchste Betriebsfähigkeit aufweist. Die Betriebsfähigkeit des Hörgeräts 2 wird vorliegend aus einem Betriebsparameter des Hörgeräts 2 abgeleitet. Der Betriebsparameter ist eine Größe, welche sich im Betrieb des Hörgeräts 2 typischerweise dynamisch verändert und dadurch einen bestimmten Zustand des Hörgeräts 2 zu einem gegebenen Zeitpunkt anzeigt. Der Betriebsparameter quantifiziert vorliegend eine betriebsrelevante Eigenschaft des Hörgeräts 2 oder einer Komponente des Hörgeräts 2. Beispielsweise wird die Betriebsfähigkeit anhand eines Ladezustands des Energiespeichers 24 des jeweiligen Hörgeräts 2 bestimmt, sodass dasjenige Hörgerät 2 als Gateway 20 konfiguriert wird, welches in dem jeweiligen Subnetz 16, 18 den höchsten Ladezustand aufweist. Alternativ oder zusätzlich wird die Betriebsfähigkeit anhand einer Sende- und/oder Empfangsqualität des Hörgeräts 2 bestimmt, sodass dasjenige Hörgerät 2 als Gateway 20 konfiguriert wird, welches in dem jeweiligen Subnetz 16, 18 die höchste Sende- und/oder Empfangsqualität aufweist. Dadurch wird sichergestellt, dass das Hörgerät 2, dessen Schnittstelle 14 die beste Sendequalität oder Empfangsqualität oder beides aufweist, den Datenaustausch mit einem anderen Subnetz 16, 18 steuert.

Vorliegend werden solche Hörgeräte 2 gemeinsam einem Subnetz 16, 18 zugeordnet, welche sich innerhalb eines Maximalabstands zueinander befinden, d.h. welcher sich in räumlicher Nähe zueinander befinden. Beispielsweise beträgt der Maximalabstand zwischen 1 m und 10 m oder entspricht der Reichweite der Schnittstelle 14 eines jeweiligen Hörgeräts 2. Außerdem wird vorliegend zum Datenaustausch ein Kompressionsverfahren verwendet, welches in einer jeweiligen Steuereinheit 10 eines jeweiligen Hörgeräts 2 implementiert ist und welches zur Reduzierung der Datenmenge dient, welche beim Datenaustausch vom Hörgerät 2 übermittelt wird. Die Zuordnung abhängig vom Maximalabstand sowie die Anwendung eines Kompressionsverfahrens sind jedoch grundsätzlich optional und auch unabhängig voneinander sowie unabhängig von den konkret gezeigten Konfigurationen des Netzwerks 12 anwendbar.

### Bezugszeichenliste

- 2: Hörgerät
- 4: Mikrofon
- 6: Signalverarbeitung
- 8: Hörer
- 10: Steuereinheit
- 12: Netzwerk
- 14: Schnittstelle
- 16: Subnetz, peer-to-peer-Netzwerk, Mesh-Netzwerk
- 18: Subnetz, Ringnetz
- 20: Gateway
- 22: Zusatzgerät
- 24: Energiespeicher
- N: Nutzer

## Patentansprüche

1. Verfahren zum Betrieb eines Netzwerks (12), mit mehreren Hörgeräten (2), welche unterschiedlichen Nutzern (N) zugeordnet sind,
- wobei jedes der Hörgeräte (2) eine Schnittstelle (14) aufweist und über diese mit wenigstens einem der übrigen Hörgeräte (2) verbunden ist, zum Datenaustausch mit diesem Hörgerät (2) und den übrigen Hörgeräten (2),
- wobei das Netzwerk (12) in mehrere Subnetze (16, 18) teilbar ist, welche dann miteinander dadurch verbunden werden, dass in jedem der Subnetze (16, 18) eines der Hörgeräte (2) als ein Gateway (20) konfiguriert wird, zum Datenaustausch zwischen den Hörgeräten (2) unterschiedlicher Subnetze (16, 18),
- wobei jedes der Hörgeräte (2), welches nicht als ein Gateway (20) konfiguriert ist, genau einem Subnetz (16, 18) zugeordnet ist und dynamisch einem anderen, bestehenden Subnetz (16, 18) oder einem neuen Subnetz (16, 18) zugeordnet wird, zur Erhöhung einer Übertragungsqualität beim Datenaustausch.

2. Verfahren nach Anspruch 1,
wobei innerhalb zumindest eines Subnetzes (16, 18) je zwei Hörgeräte (2) nach Art einer peer-to-peer-Verbindung unmittelbar miteinander verbunden sind.

3. Verfahren nach Anspruch 1 oder 2,
wobei das Netzwerk (12) in wenigstens zwei Subnetze (16, 18) unterteilt ist, welche jeweils eine Teilnehmeranzahl aufweisen, welche angibt, wie viele Hörgeräte (2) dem jeweiligen Subnetz (16, 18) zugeordnet sind,
wobei die Hörgeräte (2) derart auf die beiden Subnetze (16, 18) verteilt werden, dass die Teilnehmerzahlen aneinander angeglichen werden.

4. Verfahren nach einem der Ansprüche 1 bis 3,
wobei ein neues Subnetz (16, 18) erzeugt wird, falls eine Teilnehmeranzahl an Hörgeräten (2) eines bestehenden Subnetzes (16, 18) eine Maximalanzahl überschreitet, und
wobei eine Teilmenge der Hörgeräte (2) des bestehenden Subnetzes (16, 18) dem neuen Subnetz (16, 18) zugeordnet wird, sodass die Teilnehmerzahl des bestehenden Subnetzes (16, 18) reduziert wird.

5. Verfahren nach einem der Ansprüche 1 bis 4,
wobei ein jeweiliges Subnetz (18) als ein Ringnetz (18) ausgebildet ist, in welchem ein jeweiliges Hörgerät (2) lediglich mit zwei anderen Hörgeräten (2) verbunden ist, sodass der Datenaustausch innerhalb des Subnetzes (18) der Reihe nach von Hörgerät (2) zu Hörgerät (2) erfolgt.

6. Verfahren nach einem der Ansprüche 1 bis 5,
wobei das Netzwerk (12) in wenigstens zwei Subnetze (18) unterteilt ist, welche jeweils Ringnetze (18) sind und welche jeweils eine Umlaufzeit aufweisen, welche angibt, wie lange ein Umlauf von Daten in dem Subnetz (18) benötigt,
wobei die Hörgeräte (2) derart auf die beiden Subnetze (18) verteilt werden, dass die Umlaufzeiten aneinander angeglichen werden.

7. Verfahren nach einem der Ansprüche 1 bis 6,
wobei ein neues Subnetz (16, 18) erzeugt wird, falls eine Umlaufzeit eines bestehenden Subnetzes (18), welches ein Ringnetz (18) ist, eine Maximallaufzeit überschreitet, und
wobei eine Teilmenge der Hörgeräte (2) des bestehenden Subnetzes (18) dem neuen Subnetz (16, 18) zugeordnet wird, sodass die Umlaufzeit des bestehenden Subnetzes (18) reduziert wird.

8. Verfahren nach einem der Ansprüche 1 bis 7,
wobei jedes der Hörgeräte (2) eine Betriebsfähigkeit aufweist,
wobei in einem jeweiligen Subnetz (16, 18) dasjenige Hörgerät (2) als ein Gateway (20) konfiguriert wird, welches die höchste Betriebsfähigkeit aufweist.

9. Verfahren nach Anspruch 8,
wobei die Betriebsfähigkeit anhand eines Ladezustands eines Energiespeichers (24) des jeweiligen Hörgeräts (2) bestimmt wird, sodass dasjenige Hörgerät (2) als Gateway (20) konfiguriert wird, welches in dem jeweiligen Subnetz (16, 18) den höchsten Ladezustand aufweist.

10. Verfahren nach einem der Ansprüche 8 oder 9,
wobei die Betriebsfähigkeit anhand einer Sende- und/oder Empfangsqualität des Hörgeräts (2) bestimmt, sodass dasjenige Hörgerät (2) als Gateway (20) konfiguriert wird, welches in dem jeweiligen Subnetz (16, 18) die höchste Sende- und/oder Empfangsqualität aufweist.

11. Verfahren nach einem der Ansprüche 1 bis 10,
wobei ein Subnetz (16, 18) mit mehreren anderen Subnetzen (16, 18) dadurch verbunden wird, dass entsprechend viele Hörgeräte (2) jeweils als ein Gateway (20) zur Verbindung mit genau einem der anderen Subnetze (16, 18) konfiguriert werden, sodass ein jeweiliges Gateway (20) mit lediglich einem Gateway (20) eines anderen Subnetzes (16, 18) verbunden ist.

12. Verfahren nach einem der Ansprüche 1 bis 11,
wobei ein erstes Subnetz (16, 18) mit einem zweiten Subnetz (16, 18) dadurch verbunden wird, dass ein einzelnes der Hörgeräte (2) als ein Gateway (20) sowohl in dem ersten Subnetz (16, 18) als auch in dem zweiten Subnetz (16, 18) konfiguriert wird.

13. Verfahren nach einem der Ansprüche 1 bis 12,
wobei solche Hörgeräte (2) gemeinsam einem Subnetz (16, 18) zugeordnet werden, welche sich innerhalb eines Maximalabstands zueinander befinden.

14. Verfahren nach einem der Ansprüche 1 bis 13,
wobei zum Datenaustausch ein Kompressionsverfahren verwendet wird.

15. Hörgerät (2), welches ausgebildet ist zur Durchführung eines Verfahrens gemäß einem der vorhergehenden Ansprüche.

## Claims

1. Method for operating a network (12), with a plurality of hearing aids (2), which are assigned to different users (N),
- wherein each of the hearing aids (2) has an interface (14) and is connected via said interface (14) to at least one of the other hearing aids (2), for data exchange with said hearing aid (2) and the other hearing aids (2),
- wherein the network (12) is divisible into a plurality of subnets (16, 18), which are then interconnected by configuring in each of the subnets (16, 18) one of the hearing aids (2) as a gateway (20), for data exchange between the hearing aids (2) of different subnets (16, 18),
- wherein each of the hearing aids (2), which is not configured as a gateway (20), is assigned to exactly one subnet (16, 18) and is dynamically assigned to another existing subnet (16, 18) or to a new subnet (16, 18), for increasing a transmission quality during data exchange.

2. Method according to claim 1,
wherein within at least one subnet (16, 18) two hearing aids (2) each are directly connected to each other in the manner of a peer-to-peer connection.

3. Method according to claim 1 or 2,
wherein the network (12) is divided into at least two subnets (16, 18), each of which has a number of subscribers indicating how many hearing aids (2) are assigned to the respective subnet (16, 18),
wherein the hearing aids (2) are distributed to the two subnets (16, 18) in such a way that the numbers of subscribers are matched with each other.

4. Method according to one of claims 1 to 3,
wherein a new subnet (16, 18) is created if a number of subscribers of hearing aids (2) of an existing subnet (16, 18) exceeds a maximum number, and
wherein a subset of the hearing aids (2) of the existing subnet (16, 18) is assigned to the new subnet (16, 18), so that the number of subscribers of the existing subnet (16, 18) is reduced.

5. Method according to one of claims 1 to 4,
wherein a respective subnetwork (18) is designed as a ring network (18), in which a respective hearing aid (2) is only connected to two other hearing aids (2), so that the data exchange within the subnetwork (18) takes place sequentially from hearing aid (2) to hearing aid (2).

6. Method according to one of claims 1 to 5,
wherein the network (12) is divided into at least two subnets (18), each of which is a ring network (18) and each of which has a circulation time indicating how long the data takes to circulate in the subnet (18),
wherein the hearing aids (2) are distributed to the two subnetworks (18) in such a way that the circulation times are matched with each other.

7. Method according to one of claims 1 to 6,
wherein a new subnet (16, 18) is generated if a circulation time of an existing subnet (18), which is a ring network (18), exceeds a maximum circulation time, and
wherein a subset of the hearing aids (2) of the existing subnetwork (18) is assigned to the new subnet (16, 18) such that the circulation time of the existing subnetwork (18) is reduced.

8. Method according to one of claims 1 to 7,
wherein each of the hearing aids (2) has an operational capability,
wherein in a respective subnet (16, 18) that hearing aids (2) is configured as a gateway (20), which has the highest operational capability.

9. Method according to claim 8,
wherein the operational capability is determined based on a state of charge of an energy storage device (24) of the respective hearing aid (2), such that the hearing aid (2) having the highest state of charge in the respective subnet (16, 18) is configured as the gateway (20).

10. Method of one of claims 8 or 9,
wherein the operational capability is determined on the basis of a transmission and/or reception quality of the hearing aid (2), so that that hearing aid (2) is configured as gateway (20), which has the highest transmission and/or reception quality in the respective subnet (16, 18).

11. Method according to one of claims 1 to 10,
wherein a subnet (16, 18) is connected to a plurality of other subnets (16, 18) by configuring a corresponding number of hearing aids (2) each as a gateway (20) for connection to exactly one of the other subnets (16, 18), so that a respective gateway (20) is connected to only one gateway (20) of another subnet (16, 18).

12. Method according to one of claims 1 to 11,
wherein a first subnet (16, 18) is connected to a second subnet (16, 18) by configuring a single one of the hearing aids (2) as a gateway (20) in both the first subnet (16, 18) and the second subnet (16, 18).

13. Method according to one of claims 1 to 12,
wherein such hearing aids (2) are jointly assigned to a subnet (16, 18), which are within a maximum distance from each other.

14. Method according to one of claims 1 to 13,
wherein a compression method is used for data exchange.

15. Hearing aid (2) designed to carry out a method according to one of the preceding claims.

## Revendications

1. Procédé d'exploitation d'un réseau (12), avec une pluralité d'appareils auditifs (2), qui sont attribués à différents utilisateurs (N),
- dans lequel chacun des appareils auditifs (2) comprend une interface (14) et est relié par celle-ci à au moins un des autres appareils auditifs (2), pour l'échange de données avec ledit appareil auditif (2) et les autres appareils auditifs (2),
- dans lequel le réseau (12) peut être divisé en une pluralité de sous-réseaux (16, 18), qui sont ensuite reliés entre eux en configurant, dans chacun des sous-réseaux (16, 18), l'un des appareils auditifs (2) comme une passerelle (20), pour l'échange de données entre les appareils auditifs (2) de différents sous-réseaux (16, 18),
- dans lequel chacun des appareils auditifs (2), qui n'est pas configuré comme une passerelle (20), est attribué exactement à un sous-réseau (16, 18) et est attribué dynamiquement à un autre sous-réseau (16, 18) existant ou à un nouveau sous-réseau (16, 18), pour l'augmentation d'une qualité de transmission lors de l'échange de données.

2. Procédé selon la revendication 1,
dans lequel, à l'intérieur d'au moins un sous-réseau (16, 18), deux appareils auditifs (2) sont respectivement reliés directement entre eux à la manière d'une liaison peer-to-peer.

3. Procédé selon la revendication 1 ou 2,
dans lequel le réseau (12) est divisé en au moins deux sous-réseaux (16, 18), qui comprennent chacun un nombre d'abonnés indiquant combien d'appareils auditifs (2) sont attribués au sous-réseau respectif (16, 18),
dans lequel les appareils auditifs (2) sont répartis entre les deux sous-réseaux (16, 18) de telle sorte que les nombres d'abonnés sont alignés.

4. Procédé selon l'une des revendications 1 à 3,
dans lequel un nouveau sous-réseau (16, 18) est généré si un nombre d'abonnés à des appareils auditifs (2) d'un sous-réseau existant (16, 18) dépasse un nombre maximal, et
dans lequel un sous-ensemble des appareils auditifs (2) du sous-réseau existant (16, 18) est attribué au nouveau sous-réseau (16, 18) de sorte que le nombre d'abonnés du sous-réseau existant (16, 18) est réduit.

5. Procédé selon l'une des revendications 1 à 4,
dans lequel un sous-réseau respectif (18) est conçu comme un réseau en anneau (18), dans lequel un appareil auditif respectif (2) est relié uniquement à deux autres appareils auditifs (2) de sorte que l'échange de données à l'intérieur du sous-réseau (18) s'effectue successivement d'appareil auditif (2) à appareil auditif (2).

6. Procédé selon l'une des revendications 1 à 5,
dans lequel le réseau (12) est divisé en au moins deux sous-réseaux (18), qui sont chacun des réseaux en anneau (18) et qui ont chacun un temps de circulation indiquant combien de temps une circulation de données dans le sous-réseau (18) prend,
dans lequel les appareils auditifs (2) sont répartis entre les deux sous-réseaux (18) de telle sorte que les temps de circulation sont alignés.

7. Procédé selon l'une des revendications 1 à 6,
dans lequel un nouveau sous-réseau (16, 18) est généré si un temps de circulation d'un sous-réseau existant (18), qui est un réseau en anneau (18), dépasse un temps de circulation maximal, et
dans lequel un sous-ensemble des appareils auditifs (2) du sous-réseau existant (18) est attribué au nouveau sous-réseau (16, 18) de sorte que le temps de circulation du sous-réseau existant (18) est réduit.

8. Procédé selon l'une des revendications 1 à 7,
dans lequel chacun desdits appareils auditifs (2) a une capacité de fonctionnement,
dans lequel, dans un sous-réseau respectif (16, 18), l'appareil auditif (2) ayant la capacité opérationnelle la plus élevée est configuré comme une passerelle (20).

9. Procédé selon la revendication 8,
dans lequel la capacité opérationnelle est déterminée à l'aide d'un état de charge d'un accumulateur d'énergie (24) de l'appareil auditif respectif (2) de sorte que l'appareil auditif (2) ayant l'état de charge le plus élevé dans le sous-réseau respectif (16, 18) est configuré comme passerelle (20).

10. Procédé selon l'une des revendications 8 ou 9,
dans lequel la capacité opérationnelle est déterminée sur la base d'une qualité d'émission et/ou de réception de l'appareil auditif (2) de sorte que l'appareil auditif (2) ayant la qualité d'émission et/ou de réception la plus élevée dans le sous-réseau respectif (16, 18) est configuré comme passerelle (20).

11. Procédé selon l'une des revendications 1 à 10,
dans lequel un sous-réseau (16, 18) est relié à une pluralité d'autres sous-réseaux (16, 18) en configurant un nombre correspondant d'appareils auditifs chacun en tant que passerelle (20) pour la liaison avec exactement l'un des autres sous-réseaux (16, 18) de sorte qu'une passerelle respective (20) est reliée à seulement une passerelle (20) d'un autre sous-réseau (16, 18).

12. Procédé selon l'une des revendications 1 à 11,
dans lequel un premier sous-réseau (16, 18) est reliée à un deuxième sous-réseau (16, 18) en configurant un seul des appareils auditifs (2) comme une passerelle (20) à la fois dans le premier sous-réseau (16, 18) et dans le deuxième sous-réseau (16, 18).

13. Procédé selon l'une des revendications 1 à 12,
dans lequel tels appareils auditifs (2), qui se trouvent à une distance maximale les uns des autres, sont attribués conjointement à un sous-réseau (16, 18).

14. Procédé selon l'une des revendications 1 à 13,
dans lequel un procédé de compression est utilisé pour l'échange de données.

15. Appareil auditif (2) conçue pour mettre en œuvre un procédé selon l'une des revendications précédentes.
